(19) Europäisches Patentamt
European Patent Office
Office européen des brevets

(11) **EP 4 113 443 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **21182219.2**

(22) Anmeldetag: **29.06.2021**

(51) Internationale Patentklassifikation (IPC):
***G06T 11/00*** (2006.01)

(52) Gemeinsame Patentklassifikation (CPC):
**G06T 11/008;** G06T 2211/408

(54) **COMPUTERIMPLEMENTIERTES VERFAHREN ZUR REDUZIERUNG VON ARTEFAKTEN BEI DER MEHRENERGIEBILDGEBUNG, COMPUTERTOMOGRAPHIEEINRICHTUNG, COMPUTERPROGRAMM UND ELEKTRONISCH LESBARER DATENTRÄGER**

COMPUTER-IMPLEMENTED METHOD FOR REDUCING ARTIFACTS IN MULTI-ENERGY IMAGING, COMPUTED TOMOGRAPHY APPARATUS, COMPUTER PROGRAM, AND ELECTRONICALLY READABLE DATA CARRIER

PROCÉDÉ MIS EN ŒUVRE PAR ORDINATEUR DESTINÉ À LA RÉDUCTION DES ARTEFACTS DANS L'IMAGERIE À ÉNERGIES MULTIPLES, AGENCEMENT DE TOMOGRAPHIE ASSISTÉE PAR ORDINATEUR, PROGRAMME INFORMATIQUE ET SUPPORT DE DONNÉES LISIBLE ÉLECTRONIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.01.2023   Patentblatt 2023/01**

(73) Patentinhaber: **Siemens Healthineers AG**
**91301 Forchheim (DE)**

(72) Erfinder: **Sunnegaardh, Johan**
**91052 Erlangen (DE)**

(74) Vertreter: **Siemens Healthineers**
**Patent Attorneys**
**Siemens Healthcare GmbH**
**SHS TE IP**
**Henkestraße 127**
**91052 Erlangen (DE)**

(56) Entgegenhaltungen:
- **SUNNEGÅRDH JOHAN ET AL: "A New Method for Windmill Artifact Reduction", FULLY THREE-DIMENSIONAL IMAGE RECONSTRUCTION IN RADIOLOGY AND NUCLEAR MEDICINE, 16. Juni 2013 (2013-06-16), XP055867828, Lake Tahoe, California**
- **JOHAN SUNNEGÅRDH: "Method for Reduction of Artifacts in Computed Tomography", PRIOR ART PUBLISHING, 26. November 2013 (2013-11-26), XP040632747,**

EP 4 113 443 B1

**Beschreibung**

Die Erfindung betrifft ein computerimplementiertes Verfahren zur Reduzierung von Artefakten wenigstens einer Artefaktart, insbesondere von Kegelstrahlartefakten, bei der Ermittlung von Computertomographiebilddatensätzen aus einem Projektionsbildersatz der Mehrenergie-Computertomographie, gemäß Patentanspruch 1.

Daneben betrifft das Verfahren eine Computertomographieeinrichtung, ein Computerprogramm und einen elektronisch lesbaren Datenträger.

Die Computertomographiebildgebung ist ein etabliertes und wichtiges Werkzeug für medizinische Untersuchungen eines Patienten. Hierbei wird eine Aufnahmeanordnung einer Computertomographieeinrichtung derart verwendet, dass sich eine Röntgenquelle entlang einer Aufnahmetrajektorie derart bewegt, dass Projektionsbilder unter Verwendung unterschiedlicher Projektionsgeometrien aufgenommen werden können. Dabei findet üblicherweise eine Rotation der Röntgenquelle um den Aufnahmebereich des Patienten statt, sodass die Projektionsgeometrien wenigstens durch einen Projektionswinkel beschrieben sind. Die Rotationsachse bildet hierbei üblicherweise auch die Längsachse einer Öffnung in einer Gantry, die die Aufnahmeanordnung beinhaltet. Dabei ist es sowohl bekannt, als Aufnahmetrajektorie eine Kreistrajektorie zu verwenden als auch eine sogenannte Spiraltrajektorie (Helix-Trajektorie), zu deren Erzeugung beispielsweise der Aufnahmebereich mittels einer Patientenliege entlang der Rotationsachse gegenüber der rotierenden Röntgenquelle bewegt werden kann. Als Ergebnis des Aufnahmevorhangs erhält man einen Projektionsbildersatz, bei modernen Computertomographieeinrichtungen umfassend zweidimensionale Projektionsbilder, wobei aus diesen Projektionsbildern höherdimensionale Computertomographiebilddatensätze rekonstruiert werden können, beispielsweise aus zweidimensionalen Projektionsbildern dreidimensionale Computertomographiebilddatensätze. Zur Rekonstruktion werden häufig Rekonstruktionsalgorithmen der gefilterten Rückprojektion (FBP - Filtered Back Projection) verwendet, wobei auch iterative Rekonstruktionsverfahren bekannt sind.

Dabei ist die gefilterte Rückprojektion die Standardmethode des Standes der Technik, um Bilddatensätze in der Computertomographie zu rekonstruieren. Allerdings ist die gefilterte Rückprojektion mathematisch nicht exakt für viele Aufnahmetrajektorien und Projektionsgeometrien. Zudem nutzen viele Aufnahmevorgänge, beispielsweise Sequenzscans und/oder axiale Scans, Aufnahmeparameter, bei denen nicht hinreichend viele Projektionsdaten für eine einzigartige Rekonstruktion vorliegen. Mithin treten Rekonstruktionsartefakte in den rekonstruierten Bildern auf. Das akzeptable Niveau von Artefakten in rekonstruierten Computertomographiebilddatensätzen hängt dabei von der klinischen Anwendung ab.

Eine Klasse von Anwendungen, in der nur äußerst wenige Bildartefakte erlaubt werden können, sind Mehrenergieanwendungen, beispielsweise die Dualenergie-Computertomographie. Hierbei werden Projektionsbilder aufgenommen, die unterschiedlichen Röntgenenergieintervallen bzw. Röntgenenergiespektren zuzuordnen sind. Dabei sind im Stand der Technik zwei grundlegende Varianten denkbar. Zum einen ist es möglich, unterschiedliche Röntgenenergiespektren der Röntgenstrahlung seitens der Röntgenquelle zu erzeugen und zur zeitlich getrennten Aufnahme von Projektionsbildern, die dann den unterschiedlichen Röntgenenergiespektren zuzuordnen sind, zu nutzen. Zum anderen wurden inzwischen so genannte photonenzählende Röntgendetektoren (photon counting cetectors) vorgeschlagen, mit denen das Auftreffen einzelner Röntgenphotonen sowie deren Energie messbar ist. Entsprechend der Energie eines detektierten Röntgenphotons wird dieses in ein Energieintervall ("Energiebin") einsortiert, wobei auch einfach eine Schwellwertbetrachtung erfolgen kann, beispielsweise einen ersten Energieschwellwert überschreitende Photonen einem einem ersten Energiespektrum zugeordneten Projektionsbild und einen zweiten Energieschwellwert überschreitende Röntgenphotonen einem zweiten, einem zweiten Energiespektrum zugeordneten Projektionsbild zugewiesen werden können. Selbstverständlich können auch mehr als zwei Energiespektren bzw. Energieintervalle betrachtet werden, wobei ein Spezialfall so genannte monoenergetische Röntgenbilder sind, bei denen insbesondere nur ein einer bestimmten Röntgenenergie zugeordnetes Energiebin betrachtet wird. Es entstehen bei der Mehrenergiebildgebung mithin für jedes betrachtete Energiespektrum Projektionsbilder, die Teilsätze des gesamten Projektionsbildersatzes bilden.

Denkbar ist es nun, aus dem Teilsätzen jeweils Computertomographiebilddatensätze zu rekonstruieren und diese beispielsweise zu kombinieren, um spezielle Eigenschaften des Aufnahmegebiets wiedergebende Auswertungsdatensätze zu erzeugen. Typische Anwendungen der Mehrenergiebildgebung sind die Materialtrennung ("material decomposition") sowie die quantitative Computertomographiebildgebung. In vielen Situationen, beispielsweise bei Aufnahmevorgängen mit einem hohen Pitchfaktor der Spiraltrajektorie, eingeschränkten Projektionsdaten aufgrund von EKG-Gating oder sonstigen Gatingvorgängen, oder Kolimierungen mit einem großen Kegelwinkel, können die verbleibenden Artefakte bei Rekonstruktionen der gefilterten Rückprojektion zu stark sein, um hinreichend genaue Auswertungsdatensätze und sonstige Ergebnisse bei der Mehrenergie-Bildgebung zu erzielen.

Zur Beseitigung von Artefakten wurden bereits eine Vielzahl von Vorgehensweisen, die sich meist auf wenigstens eine Artefaktart beziehen, vorgeschlagen. Eine häufig verwendete Herangehensweise modelliert den Aufnahmevorgang, insbesondere in Form einer Vorwärtsprojektion, sowie die Rekonstruktion mathematisch, um entstehende Artefakte aufzufinden und beseitigen zu können. Hierbei kann vorgesehen sein, dass vor der Modellierung zunächst aus einem zu korrigierenden Computertomographiebilddatensatz ein Zwischendatensatz durch Anwendung eines Bildverarbeitungsoperators erzeugt wird, der für Artefakte wenigstens der Artefaktart verantwortliche Strukturen rückgewinnt, hervorhebt bzw. verstärkt. Mit anderen Worten können typische Korrekturalgorithmen auf dieser Grundlage, nach der initialen Rekonstruktion, insbesondere durch gefilterte Rückprojektion, eines zu korrigierenden Computertomographiebilddatensatzes, folgende Schritte umfassen:

A. Ermittlung eines Zwischendatensatzes durch Verwendung eines Bildverarbeitungsoperators. Es wird mithin zunächst versucht, Artefakte verursachende Strukturen zu detektieren, beispielsweise, indem Objekte mit hohem Kontrast segmentiert werden und/oder scharfe Kontrastkanten wiederhergestellt werden, die dafür bekannt sind, starke Artefakte zu verursachen. Unterschiedliche Vorgehensweisen für diesen Schritt umfassen Segmentierung (vgl. hierzu beispielsweise den Artikel von Chiang Hsieh, "A Practical Cone Beam Artifact Correction Algorithm", IEEE Nuclear Science Symposium Conference Record 2000, 2, Seiten 15 - 71 bis 15 - 74), Abschätzung aufgrund der Statistik lokaler Umgebungen (vgl. hierzu beispielsweise den Artikel von Johan Sunnegaardh et al., "A new method for windmill artifact reduction", 12th International Meeting on Fully Three-Dimensional Image Reconstruction in Radiology and Nuclear Medicine, Lake Tahoe, California, USA, 2013) sowie weitere Ansätze.

B. Modellierung des Aufnahmevorgangs und der Rekonstruktion. Dies kann beispielsweise durch eine sogenannte Vorwärtsprojektion oder in äquivalenter Weise durch Anwendung eines linearen Systemmodells auf den Zwischendatensatz erfolgen. Die entstehenden vorwärtsprojizierten bzw. modellierten Daten werden dann rekonstruiert, um die Simulation von Artefakten aufgrund der Datenaufnahme und Rekonstruktion abzuschließen. Als Ergebnis wird ein erster Modelldatensatz erhalten.

C. Anwendung eines Filters zur Modellierung der Auflösung. Um die gewünschten Auflösungseigenschaften, beispielsweise bezüglich der Modulationstransferfunktion (MTF) und/oder der Schichtbreite, zu erhalten, wird der Einfluss der Vorwärtsprojektion, Faltung und Rückprojektion durch einen dreidimensionalen linearen Filter modelliert, um einen zweiten Modelldatensatz zu erhalten. Diese Modellierung muss nicht zwangsläufig erfolgen, sodass der zweite Modelldatensatz auch durch Anwendung des Identitätsoperators auf den Zwischendatensatz ermittelt werden kann.

D. Korrekturvorgang. Nachdem die Schritte B und C abgeschlossen wurden, kann ein Artefaktdatensatz als Differenz des zweiten und des ersten Modelldatensatzes ermittelt werden und zu dem zu korrigierenden Computertomographiebilddatensatz addiert werden, um einen korrigierten Computertomographiebilddatensatz zu erhalten.

Dabei werden üblicherweise die Schritte A - D iterativ wiederholt, wobei für einen folgenden Iterationsschritt der korrigierte Computertomographiebilddatensatz als neuer zu korrigierender Computertomographiebilddatensatz verwendet wird. Die Iteration kann erfolgen, bis ein Beendigungskriterium erfüllt ist. Das Beendigungskriterium kann komplex sein, beispielsweise Bildqualitätsanalysen umfassen, oder aber einfach, beispielsweise als vorgegebene Anzahl von Iterationen. Vorgeschlagen wird in diesem Zusammenhang auch, eine Schrittlänge zu verwenden, die Eins betragen kann oder aber auch geringfügig kleiner als Eins sein kann, beispielsweise 0,9, um ein Divergieren zu neu erzeugten Artefakten zu vermeiden.

Ein Beispiel für einen solchen Korrekturalgorithmus ist auch in einer Veröffentlichung von Johan Sunnegaardh, "Method for Reduction of Artifacts in Computed Tomography", Technik Up2Date, Jahrgang 2013, Ausgabe 24, ISBN: 978-3-942905-76-3, beschrieben.

Sollen derartige Korrekturalgorithmen für die Mehrenergiebildgebung eingesetzt werden, werden also die einzelnen, den jeweiligen Engergieintervallen zugeordneten Computertomographiebilddatensatze, die aus den Teilsätzen rekonstruiert wurden, jeweils durch den Korrekturalgorithmus behandelt. Hierbei hat sich jedoch gezeigt, dass durch diese Vorgehensweise neue Artefakte eingeführt werden können, die die Genauigkeit der Mehrenergie-Auswertung negativ beeinflussen können.

Zur Lösung dieser Problematik wurde bereits vorgeschlagen, großflächige Kollimierungen am Detektor zu vermeiden, genau wie hohe Pitch-Faktoren und andere Aufnahmesituationen, die Artefakte auslösen könnten. Allerdings wird diese Vorgehensweise aus einer klinischen Sicht wenig bevorzugt, da die Leistungsfähigkeit der Computertomographieeinrichtung beschränkt wird und ein Kompromiss zwischen Mehrenergie-Anwendungen und anderen klinischen Anforderungen notwendig wird.

Der Erfindung liegt daher die Aufgabe zugrunde, eine Möglichkeit zur qualitativ hochwertigeren Artefaktreduzierung bei der Verwendung von Korrekturalgorithmen in der Mehrenergiebildgebung der Computertomographie anzugeben.

Diese Aufgabe wird erfindungsgemäß gelöst durch ein computerimplementiertes Verfahren, eine Computertomographieeinrichtung, ein Computerprogramm und einen elektronisch lesbaren Datenträger gemäß den unabhängigen Patentansprüchen. Vorteilhafte Weiterbildungen sind in den abhängigen Patentansprüchen beschrieben.

Bei einem Verfahren der eingangs genannten Art ist erfindungsgemäß vorgesehen, dass in dem Korrekturalgorithmus vor jeder Anwendung des Bildverarbeitungsoperators zusätzlich ein für alle Energiespektren zu verwendender und Bilddaten aus allen Energiespektren umfassender Strukturbilddatensatz aus den zu korrigierenden Computertomographiebilddatensätzen ermittelt wird und danach für jedes Energiespektrum dem Bildverarbeitungsoperator als zweites Argument übergeben wird, wobei durch den Bildverarbeitungsoperator durchzuführende Bildverarbeitungsmaßnahmen auf der Basis des Strukturbilddatensatzes ermittelt und die Bildverarbeitungsmaßnahmen auf den als erstes Argument übergebenen zu korrigierenden Computertomographiedatensatz angewendet werden.

Erfindungsgemäß wurde erkannt, dass die getrennte und nichtlineare Behandlung jedes Energieintervalls ohne Berücksichtigung der anderen Energiespektren ursächlich für neu auftretende Artefakte ist. Insbesondere kann der Bildverarbeitungsoperator aufgrund der Unterschiedlichkeit der einzelnen zu korrigierenden Computertomographiebilddatensätze für jeden Korrekturvorgang bei vollständig getrennter Behandlung zu unterschiedlichen Ergebnissen führen, nachdem beispielsweise bestimmte Objekte und/oder Kanten und/oder sonstige Eigenschaften in einem Teil der Computertomographiebilddatensätze schlechter zu erkennen sein können als in anderen Computertomographiebilddatensätzen für andere Energiespektren. Mithin wird vorgeschlagen, für alle Energiespektren die Ermittlung des Zwischendatensatzes auf die gleiche Grundlage zu stellen, indem die Analyse, die zu durchzuführenden Bildverarbeitungsmaßnahmen führt, für alle Energiespektren auf derselben Grundlage, nämlich dem Strukturbilddatensatz, beruht. Dieser bezieht mit besonderem Vorteil alle Energiespektren ein, nutzt also die komplette verfügbare Datenbasis, um Eigenschaften im Aufnahmebereich, die durch den Projektionsbilderset abgebildet werden, zu detektieren und gemeinsame Bildverarbeitungsmaßnahmen für alle Energiespektren abzuleiten, die dann, insbesondere linear, auf die jeweiligen Computertomographiebilddatensätze der jeweiligen Energiespektren angewendet werden. Mit anderen Worten wird die Nichtlinearität des Bildverarbeitungsoperators, die bei reiner Anwendung auf die einzelnen Computertomographiebilddatensätze zu divergentem Verhalten führen könnten, auf die mittels des Strukturbilddatensatzes breitgestellte, für alle Energiespektren gültige Strukturinformation verschoben, sodass die Artefaktkorrektur über die Energiespektren konsistent durchgeführt werden kann und eine genauere, hochqualitative Mehrenergie-Auswertung erfolgen kann. Wie grundsätzlich bekannt ist, können die Computertomographiebilddatensätze in der Mehrenergie-Auswertung beispielsweise zur Materialtrennung, mithin insbesondere zur Ermittlung einzelner Materialdatensätze, und/oder auch zur Ermittlung quantitativer Parameter, beispielsweise Kontrastmittelkonzentration und dergleichen, eingesetzt werden.

Die hier vorgeschlagene Vorgehensweise ermöglicht also den Einsatz des Korrekturalgorithmus, insbesondere auf iterative Weise, auch für Mehrenergie-Anwendungen, wobei die Entstehung neuer Artefakte möglichst weitgehend vermieden wird. Dies erlaubt den Einsatz von Mehrenergie-Anwendungen in klinischen Szenarien, wo dies vorher nicht möglich war.

Dabei sei an dieser Stelle noch angemerkt, dass im Rahmen der vorliegenden Erfindung zur Rekonstruktion bevorzugt eine gefilterte Rückprojektion durchgeführt wird, welche insbesondere schnell und einfach umsetzbar ist, wobei der Korrekturalgorithmus, insbesondere bei iterativer Anwendung, hierdurch entstehende Artefakte wenigstens teilweise entfernt bzw. reduziert und somit für hochqualitative Computertomographiebilddatensätze sorgt. Im Gegensatz zu vollständig iterativen Rekonstruktionsverfahren, beispielsweise der statistischen Rekonstruktion, welche auch als modellbasierte iterative Rekonstruktion bekannt ist, ist das erfindungsgemäße Verfahren mehrere Größenordnungen schneller.

Zusammenfassend wird also der Schritt der Bildverarbeitung zur Ermittlung des Zwischendatensatzes für jedes Energiespektrum, also jeden Computertomographiebilddatensatz, derart modifiziert, dass die durch den Bildverarbeitungsoperator ausgeübten Bildverarbeitungsmaßnahmen auf einer gemeinsamen Grundlage ermittelt werden und auf gleiche Weise, aber auf die unterschiedlichen Computertomographiebilddatensätze angewandt werden. Die restlichen Schritte im Rahmen der Rekonstruktion und Korrektur können wie zuvor verbleiben.

Zweckmäßigerweise kann der Bildverarbeitungsoperator so gestaltet werden, dass er linear in seinem ersten Argument, also bezogen auf dieses, ist. In konkreter Ausgestaltung können in dem Bildverarbeitungsoperator Koeffizienten einer Linearkombination bezüglich des ersten Arguments aus dem zweiten Argument ermittelt und angewendet werden. Konkret kann in diesem Kontext gesagt werden, dass immer dann der Strukturbilddatensatz verwendet wird, wenn der Bildverarbeitungsoperator eine Nichtlinearität erzeugen würde, sodass der Bildverarbeitungsoperator linear bezüglich seines ersten Arguments bleibt. Dies präzisiert die Schlüsseleigenschaft zur Verhinderung der Entstehung zusätzlicher Artefakte bei der Anwendung des Korrekturalgorithmus. Nachdem der Bildverarbeitungsoperator linear bezüglich des Computertomographiebilddatensatzes ist, verhält er sich identisch für alle Computertomographiebilddatensätze. Sollten mithin Artefakte durch den Bildverarbeitungsoperator entstehen, hätten sie dieselbe Struktur für alle Energiespektren und somit einen minimalen Effekt auf die folgende Mehrenergie-Auswertung.

In einer konkreten, besonders vorteilhaften Ausgestaltung der vorliegenden Erfindung kann vorgesehen sein, dass der Bildverarbeitungsoperator durch einen adaptiven bilateralen Filter gebildet wird. Die Verwendung eines adaptiven bilateralen Filters ist im Übrigen auch unabhängig von der Verwendung eines Strukturbilddatensatzes vorteilhaft bei einem Verfahren gemäß dem Oberbegriff des Anspruchs 1 einsetzbar. Adaptive bilaterale Filter sind beispielsweise in einem Artikel von B. Zhang et al., "Adaptive Bilateral Filter for Sharpness Enhancement and Noise", IEEE Transactions on Image Processing 2008, 5, 17 (5), Seiten 664 - 678, beschrieben. In diesem Artikel wurde das adaptive bilaterale Filtern als eine Möglichkeit zur Rauschreduzierung in Bildern vorgeschlagen, während gleichzeitig Kanten verstärkt wurden. Gemäß der vorliegenden Erfindung kann ein adaptiver bilateraler Filter zweckmäßig auch im Rahmen eines Korrekturalgorithmus als Bildverarbeitungsoperator eingesetzt werden, insbesondere, wenn Kanten rückgewonnen und/oder verstärkt werden sollen, wie bei den Windmühlenartefakten, deren Behandlung beispielsweise im bereits genannten Artikel von Johan Sunnegaardh et al. zur Konferenz in Lake Tahoe beschrieben ist.

In einem konkreten, speziellen Ausführungsbeispiel kann beispielsweise $f_{i(l-1)}$ den in der l-ten Iteration zu korrigierenden Computertomographiebilddatensatz des (i-1)-ten Energieintervalls bezeichnen. Die $f_{i(l-1)}$ werden mithin insbesondere kombiniert, um den Strukturbilddatensatz $f_{c(l-1)}$ zu bilden. Der Bildverarbeitungsoperator für die l-te Iteration kann dann als $G(f_{i(l-1)}|f_{c(l-1)})$ geschrieben werden. Als ein bilateraler Filter kann mithin geschrieben werden

$$f_{\text{ABF}}[r] = G(f|f_{c(l-1)})[r] = \frac{\sum_{r'\in\Omega(r)} f[r-r'] \exp\left(-\frac{r'\cdot\Delta}{2\sigma_D^2}\right) \exp\left(-\frac{\left(f_{c(l-1)}[r-r']-\left(f_{c(l-1)}[r]+\zeta[r|f_{c(l-1)}]\right)\right)^2}{2\sigma_R^2}\right)}{\sum_{r'\in\Omega(r)} \exp\left(-\frac{r'\cdot\Delta}{2\sigma_D^2}\right) \exp\left(-\frac{\left(f_{c(l-1)}[r-r']-\left(f_{c(l-1)}[r]+\zeta[r|f_{c(l-1)}]\right)\right)^2}{2\sigma_R^2}\right)}, \quad (1)$$

wobei

$$\Omega(r) = \left\{(x,y,z)\in\mathbb{Z}^3: |x|\leq\frac{N_{kx}-1}{2}\wedge|y|\leq\frac{N_{ky}-1}{2}\wedge|z|\leq\frac{N_{kz}-1}{2}\right\} \quad (2)$$

eine Umgebung der Größe ($N_x$, $N_y$, $N_z$) ist, die um das aktuelle Zentralvoxel $r$ zentriert ist. $\Delta = (\Delta_x\ \Delta_y,\ \Delta_z)^T$ ist der Voxelabstand des Bildvolumens, $\sigma_D$ ist die Größe des Domain-Kerns, $\sigma_R$ ist die Größe des Range-Kerns. $\zeta[r|f_{c(l-1)}]$ ist der adaptive Anteil des adaptiven bilateralen Filters.

In einer bevorzugten Ausführungsform, in der Kanten hervorgehoben werden sollen, mithin insbesondere ein Kantenrückgewinnungsoperator als Bildverarbeitungsoperator verwendet werden soll, kann vorgesehen sein, dass der Wert von Zeta nahe oder gleich Null in Niedrigkontrastbereichen von $f_{c(l-1)}$ ist, jedoch nahe an Kanten von $f_{c(l-1)}$ positive und negative Werte annimmt, um die entsprechenden Kanten zu verstärken.

Nachdem der hier beispielhaft dargestellte adaptive bilaterale Filter G linear in Bezug auf $f_{i(l-1)}$ ist, verhält er sich gleich für alle Eingabe-Bildvolumen.

Es sei angemerkt, dass es durchaus auch möglich ist, andere Ausgestaltungen des Bildverarbeitungsoperators zu wählen, beispielsweise die in dem Artikel von Johan Sunnegaardh et al beschriebene statistische Analyse, wobei die Analyse bzw. Sortierung in den Umgebungen selbst auf Basis des Strukturbilddatensatzes stattfindet, während die tatsächlichen Modifikationen, beispielsweise an den Medianbildung, basierend auf den zu korrigierenden Computertomographiebilddatensatz erfolgt.

Der Strukturbilddatensatz kann mit besonderem Vorteil als eine Linearkombination der Computertomographiebilddatensätze der einzelnen Energiespektren bestimmt werden. Möglich, als ein sehr spezieller Sonderfall der Linearkombination, ist es auch, dass der Strukturbilddatensatz als ein einem alle weiteren Energiespektren umfassenden Energiespektrum, insbesondere dem Energiespektrum mit der niedrigsten Energieschwelle, zugeordneter Computertomographiebilddatensatz gewählt wird. Es kann allgemein, mit der oben eingeführten Notation, gesagt werden, dass

$$f_{c(l-1)} = \sum_{k=0}^{N_{\text{energies}}-1} c_k\,f_{k(l-1)}\,. \quad (3)$$

Dabei summieren sich die Koeffizienten $c_k$ zu Eins auf und werden mit besonderem Vorteil so gewählt, dass das Kontrast-zu-Rausch-Verhältnis in $f_{c(l-1)}$ maximiert ist. Wird, wie mit besonderem Vorteil auch allgemein zweckmäßig ist, zur Aufnahme der Projektionsbilder des Projektionsbildersatzes ein photonenzählender Röntgendetektor verwendet, ist es möglich, einfach den Koeffizienten, der der niedrigsten Photonenenergieschwelle zugeordnet ist, auf Eins zu setzen und alle anderen Koeffizienten auf Null. Bei einer anderen Verteilung von Energiespektren sind selbstverständlich auch andere Koeffizienten denkbar, wobei beispielsweise durch heuristische bzw. empirische Untersuchungen eine Maximierung des Kontrast-zu-Rausch-Verhältnisses herbeigeführt werden kann.

Wie bereits erwähnt wurde, ist es auch allgemein vorteilhaft, wenn die Projektionsbilder des Projektionsbildersatzes mit einem photonenzählenden Röntgendetektor der aufnehmenden Computertomographieeinrichtung aufgenommen werden. Dies sorgt dafür, dass insbesondere alle benötigten Energiespektren in einer einzigen Messung aufgenommen werden können. Beispielsweise kann ein Detektor mit einem Szintillator verwendet werden, möglich ist hier jedoch auch die Verwendung eines direkt wandelnden Röntgendetektors.

In Weiterbildung der vorliegenden Erfindung kann auch vorgesehen sein, dass bei iterativer Durchführung des Korrekturalgorithmus eine Schrittweite, die kleiner als Eins ist, verwendet wird. Dies kann immer dann zweckmäßig sein, wenn ein Divergieren in Richtung eines neu hinzugefügten Artefakts oder bestehenden Artefakts zu befürchten steht. Dann kann beispielsweise ein solcher Effekt abgeschwächt werden, indem ein Teil des ursprünglichen, zu korrigierenden Computertomographiebildes wieder beigemischt wird. Beispielsweise kann eine Schrittweite von 0,9 gewählt werden.

Mit besonderem Vorteil kann, wie bereits dargelegt wurde, der Bildverarbeitungsoperator ein Kantenrückgewinnungsoperator zumindest für Kanten sein, deren Normalenvektor eine insbesondere einen Schwellwert übersteigende Komponente entlang einer Rotationsachse aufweist, um die eine Röntgenquelle einer verwendeten Computertomographieeinrichtung entlang einer Aufnahmetrajektorie bei dem Aufnahmevorgang der Projektionsbilder des Projektionsbildersatzes rotiert. Damit können insbesondere sogenannte Windmühlenartefakte behandelt werden, wobei beispielhaft auf den bereits genannten Artikel von Johan Sunnegaardh et al. von der Konferenz in Lake Tahoe verwiesen sei.

Neben dem Verfahren betrifft die Erfindung auch eine Computertomographieeinrichtung, eine Aufnahmeanordnung mit einer Röntgenquelle und einem Röntgendetektor sowie eine zur Durchführung des erfindungsgemäßen Verfahrens ausgebildete Steuereinrichtung. Sämtliche Ausführungen bezüglich des erfindungsgemäßen Verfahrens lassen sich analog auf die erfindungsgemäße Computertomographieeinrichtung übertragen, mit welcher mithin ebenso die bereits genannten Vorteile erhalten werden können. Insbesondere ist es möglich, Computertomographiebilder unmittelbar an ihrer Aufnahmestelle zu korrigieren.

Die Steuereinrichtung kann wenigstens einen Prozessor und wenigstens ein Speichermittel aufweisen. Durch Hardware und/oder Software können Funktionseinheiten gebildet sein, um Schritte des erfindungsgemäßen Verfahrens durchzuführen. So kann die Steuereinrichtung neben einer Aufnahmeeinheit zur Steuerung des Aufnahmebetriebs der Computertomographieeinrichtung zunächst eine Rekonstruktionseinheit zur Rekonstruktion von Datensätzen aus Projektionsbildern aufweisen. Ferner kann vorgesehen sein, dass die Steuereinrichtung eine Ermittlungseinheit zur Ermittlung des Strukturbilddatensatzes, eine Bildverarbeitungseinheit zur Anwendung des Bildverarbeitungsoperators, eine Modellierungseinheit zur Ermittlung der Modelldatensätze und eine Korrektureinheit zur Ermittlung des Artefaktdatensatzes und zu dessen Anwendung zur Korrektur umfassen.

Ein erfindungsgemäßes Computerprogramm ist direkt in ein Speichermittel einer Recheneinrichtung, insbesondere einer Steuereinrichtung einer Computertomographieeinrichtung, ladbar und weist Programmmittel auf, um die Schritte eines erfindungsgemäßen Verfahrens durchzuführen, wenn das Computerprogramm auf der Recheneinrichtung ausgeführt wird. Das Computerprogramm kann auf einem erfindungsgemäßen elektronisch lesbaren Datenträger gespeichert sein, welcher mithin darauf gespeicherte Steuerinformationen umfasst, die wenigstens ein erfindungsgemäßes Computerprogramm umfassen und derart ausgestaltet sind, dass bei Verwendung des Datenträgers in einer Recheneinrichtung, insbesondere einer Steuereinrichtung einer Computertomographieeinrichtung, diese ausgebildet wird, ein erfindungsgemäßes Verfahren durchzuführen. Bei dem Datenträger kann es sich insbesondere um einen nichttransienten Datenträger, beispielsweise eine CD-ROM, handeln.

Weitere Vorteile und Einzelheiten der vorliegenden Erfindung ergeben sich aus den im Folgenden beschrieben Ausführungsbeispielen sowie anhand der Zeichnung. Dabei zeigen:

Fig. 1     einen Ablaufplan eines Ausführungsbeispiels des erfindungsgemäßen Verfahrens,

Fig 2     eine Prinzipskizze einer Computertomographieeinrichtung gemäß der vorliegenden Erfindung, und

Fig. 3     den funktionalen Aufbau einer Steuereinrichtung der Computertomographieeinrichtung.

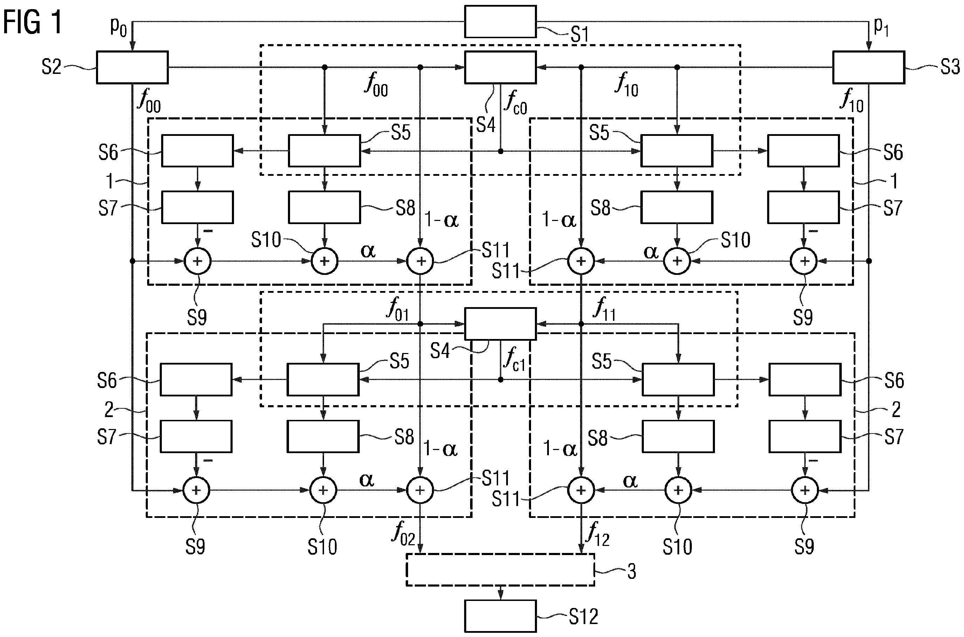

Fig. 1 zeigt einen Ablaufplan eines Ausführungsbeispiels des erfindungsgemäßen Verfahrens. Dabei wird zunächst in einem Schritt S1 ein Projektionsbildersatz bereitgestellt. Hierzu wird ein Aufnahmevorgang mit einer Computertomographieeinrichtung durchgeführt, die eine Röntgenquelle, die entlang einer Aufnahmetrajektorie, beispielsweise einer Kreisbahn oder einer Spiralbahn, bewegt werden kann und ein Röntgenstrahlenfeld in Kegelstrahlgeometrie ausstrahlt, und einen photonenzählenden Röntgendetektor umfasst. Aufgrund des photonenzählenden Röntgendetektors können die Photonenenergien eintreffender Röntgenphotonen ermittelt werden, sodass es möglich ist, in einem einzigen Aufnahmevorgang Projektionsdaten für unterschiedliche Energiespektren zu ermitteln, mithin Mehrenergie-Bildgebung durchzuführen. Das vorliegende Beispiel bezieht sich auf zwei Energiespektren, also Dualenergiebildgebung, sodass ein erster, dem ersten Energiespektrum zugeordneter Teilsatz des Projektionsbildersatzes und ein zweiter, dem zweitem Energiespektrum zugeordneter Teilsatz des Projektionsbildersatzes existieren. Selbstverständlich ist die vorliegende Erfindung auch für eine größere Zahl von Energiespektren einsetzbar.

In Fig. 1 wird der erste Teilsatz mit $p_0$ bezeichnet, der zweite Teilsatz mit $p_1$. Aus dem ersten Teilsatz $p_0$ wird in einem Schritt S2 ein erster, noch zu korrigierender Computertomographiebilddatensatz $f_{00}$ ermittelt, vorliegend durch

gefilterte Rückprojektion. Analog wird im Schritt S3 mittels gefilterter Rückprojektion aus dem zweiten Teilsatz $p_1$ ein Computertomographiebilddatensatz $f_{10}$ ermittelt.

Im Folgenden soll nun iterativ, zur besseren Darstellung beispielhaft in hier zwei Iterationen 1 und 2, ein Korrekturalgorithmus, welcher insbesondere Kegelstrahlartefakte korrigiert, angewendet werden. Vorbereitend hierzu wird jedoch in einem Schritt S4 unter Nutzung der Computertomographiebilddatensätze $f_{00}$ und $f_{10}$, für den zweiten Iterationsschritt selbstverständlich aus den im ersten Iterationsschritt korrigierten Computertomographiebilddatensätzen $f_{01}$ und $f_{11}$, ein jeweiliger Strukturbilddatensatz $f_{c0}$ bzw. $f_{c1}$ ermittelt. Hierzu kann eine Linearkombination der Computertomographiebilddatensätze, insbesondere mit Koeffizienten derart, dass das Kontrast-zu-Rausch-Verhältnis maximiert wird, erfolgen, vgl. Formel(3). Alternativ ist es auch denkbar, nachdem das Energiespektrum mit der niedrigsten Energieschwelle bei photonenzählenden Röntgendetektoren üblicherweise alle anderen Energiespektren enthält, mithin auf der größten Datenbasis beruht, den entsprechenden Koeffizienten auf Eins und die restlichen Koeffizienten auf Null zu setzen, mithin den Computertomographiebilddatensatz mit der niedrigsten Energieschwelle als den Strukturbilddatensatz zu wählen.

Im Rahmen des Korrekturalgorithmus wird nun zunächst in Schritten S5 ein Bildverarbeitungsoperator (gemäß der obigen Notation G) angewendet, vorliegend ein Kantenrückgewinnungsoperator, beispielsweise als ein adaptiver bilateraler Filter gemäß Formel (1). Allgemein formuliert werden so Bildverarbeitungsmaßnahmen auf der Basis des Strukturbilddatensatzes $f_{c0}$ bzw. $f_{c1}$ ermittelt, die tatsächliche Modifikation und Anwendung der Bildverarbeitungsmaßnahmen findet jedoch hinsichtlich des jeweiligen Computertomographiedatensatzes $f_{00}$ und $f_{10}$ bzw. $f_{01}$ und $f_{11}$ statt. Idealerweise ist, wie oben gemäß Formel (1), der Bildverarbeitungsoperator G in seinem ersten Argument, also dem jeweiligen Computertomographiedatensatz, linear.

Auf diese Weise werden alle Computertomographiebilddatensätze gleich behandelt, was die Einführung zusätzlicher Artefakte, die nur für bestimmte Computertomographiebilddatensätze existieren, vermeidet.

Der Rest des Korrekturalgorithmus bleibt unverändert, so dass insbesondere ein erster Modelldatensatz durch Vorwärtsprojektion in Schritten S6 und Rekonstruktion, wiederum mittels gefilterter Rückprojektion, in Schritten S7 ermittelt werden kann, um die Artefaktentstehung beim Aufnahmevorgang und der Rekonstruktion zu modellieren. Ein zweiter Modelldatensatz kann in Schritten S8 durch Anwendung eines Tiefpassfilters zur Modellierung von Auflösungseffekten oder aber einer Identitätsabbildung, falls diese nicht modelliert werden sollen, bestimmt werden. Der Artefaktdatensatz wird nicht explizit bestimmt, sondern lediglich implizit, indem sequenziell in Schritten S9 und S10 zunächst der erste Modelldatensatz von dem Computertomographiebilddatensatz abgezogen wird, dann der zweite Modelldatensatz hinzuaddiert wird. Zu dem hier konkret als Beispiel verwendeten Korrekturalgorithmus sei rein beispielhaft auf die angesprochene Veröffentlichung von J. Sunnegaardh in Technik Up2Date, wie oben zitiert, verwiesen.

Es sei noch darauf hingewiesen, dass optional auch eine Schrittweite $\alpha$, die kleiner als eins ist, verwendet werden kann, wie durch den optionalen Schritt S11 angedeutet ist.

Auch wenn vorliegend nur zwei Iterationen 1, 2 gezeigt sind, kann selbstverständlich auch eine andere vorbestimmte Zahl von Iterationen 1, 2 verwendet werden, oder es kann nach jeder Iteration eine Beendigungsbedingung überprüft werden, die beispielsweise die Bildqualität bewertet.

Zudem muss selbstverständlich kein adaptiver bilateraler Filter verwendet werden, sondern es kann auch beispielsweise eine Analyse von Umgebungen erfolgen, beispielsweise eine Sortierung, wobei entsprechende Bearbeitungsmaßnahmen, wie beispielsweise Mittelwert-oder Medianbildungen, dann auf den zu korrigierenden Computertomographiedatensätzen erfolgen.

Weitere Iterationen sind optional durch den Kasten 3 angedeutet.

Die erhaltenen, korrigierten Computertomographiebilddatensätze, hier $f_{02}$ und $f_{12}$, können dann in einem Schritt S12 im Rahmen einer Mehrenergie-Auswertung, hier Dualenergie-Auswertung, weiterverarbeitet werden, beispielsweise um eine Materialzerlegung vorzunehmen und/oder quantitative Parameter zu bestimmen.

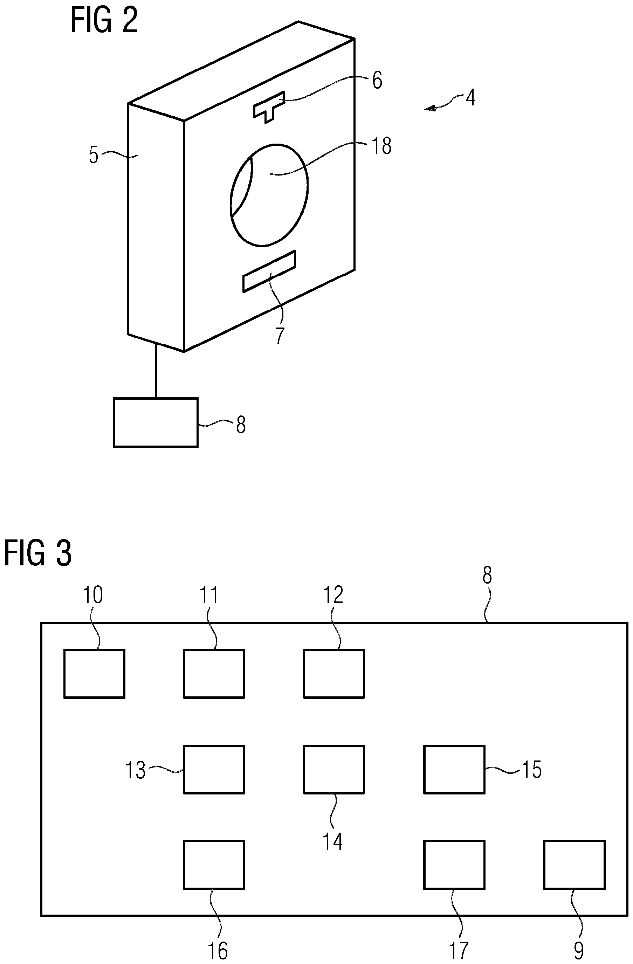

Fig. 2 zeigt eine Prinzipskizze einer erfindungsgemäßen Computertomographieeinrichtung 4. Diese weist, wie grundsätzlich bekannt, eine Gantry 5 mit einer Patientenöffnung 18 auf, in die ein Aufnahmebereich eines Patienten mittels einer hier nicht näher gezeigten Patientenliege eingefahren werden kann. In der Gantry 5 ist eine Aufnahmeanordnung umfassend eine Röntgenquelle 6 und einen photonenzählenden Röntgendetektor 7 um eine der Längsachse der Patientenöffnung 18 entsprechende Rotationsachse rotierbar gelagert, um Aufnahmetrajektorien zu realisieren. Eine Spiraltrajektorie kann beispielsweise durch einen entsprechenden Vorschub der Patientenliege umgesetzt werden.

Der Betrieb der Computertomographieeinrichtung 4 wird von einer Steuereinrichtung 8 gesteuert, deren funktionaler Aufbau in Fig. 3 näher erläutert ist.

Demgemäß umfasst die Steuereinrichtung 8 zunächst ein Speichermittel 9, in dem Projektionsbildersätze, Computertomographiebilder, Modelldatensätze und dergleichen anfallende Daten zumindest temporär gespeichert werden können. Eine Aufnahmeeinheit 10 steuert den Aufnahmebetrieb der Computertomographieeinrichtung 4, beispielsweise zur Aufnahme des Projektionsbildersatzes im Schritt S1. In einer Rekonstruktionseinheit 11 können aus Projektionsbildern höher dimensionale Datensätze, beispielsweise die Computertomographiebilddatensätze in den Schritten S2 und S3, rekonstruiert werden, wobei eine gefilterte Rückprojektion genutzt wird. Auch im Rahmen des Korrekturalgorithmus, Schritt S7, kann auf die Rekonstruktionseinheit 11 zurückgegriffen werden.

In einer Ermittlungseinheit 12 wird gemäß Schritt S4 der Strukturbilddatensatz ermittelt. Die Steuereinrichtung 8 umfasst ferner eine Bildverarbeitungseinheit 13 zur Anwendung des Bildverarbeitungsoperators gemäß den Schritten S5, eine Modellierungseinheit 14 Durchführung der Schritte S6 bis S8, wobei auf die Rekonstruktionseinheit 11 zurückgegriffen werden kann, wie beschrieben, und eine Korrektureinheit 15 zur Korrektur gemäß den Schritten S9, S10 und optional auch zur Berücksichtigung der Schrittweite gemäß dem optionalen Schritt S11. Optional kann zur Koordinierung der gesamten Rekonstruktions- sowie iterativen Korrekturpipeline auch eine Koordinierungseinheit 16 vorgesehen werden.

In einer Auswertungseinheit 17 kann dann eine Mehrenergie-Auswertung gemäß dem Schritt S12 erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Computerimplementiertes Verfahren zur Reduzierung von Artefakten wenigstens einer Artefaktart, insbesondere von Kegelstrahlartefakten, bei der Ermittlung von Computertomographiebilddatensätzen aus einem Projektionsbildersatz der Mehrenergie-Computertomographie, wobei der Projektionsbildersatz wenigstens zwei unterschiedlichen Energiespektren zugeordnete Teilsätze umfassend bereitgestellt wird und zur Ermittlung und Korrektur der Computertomographiebilddatensätze für jedes Energiespektrum:

   - ein zu korrigierender Computertomographiebilddatensatz aus dem jeweiligen Teilsatz rekonstruiert wird, und
   - im Rahmen eines Korrekturalgorithmus, insbesondere iterativ:

      - ein artefaktverursachende Strukturen hervorhebender und/oder rekonstruierender und/oder auswählender Bildverarbeitungsoperator zur Ermittlung eines Zwischendatensatzes auf den Computertomographiebilddatensatz angewendet wird,
      - ein erster Modelldatensatz durch Vorwärtsprojektion und Rekonstruktion ausgehend von dem Zwischendatensatz und ein zweiter Modelldatensatz durch Anwendung eines Tiefpassfilters oder der Identitätsabbildung auf den Zwischendatensatz ermittelt werden, und
      - ein Artefaktdatensatz durch Subtraktion des zweiten Modelldatensatzes von dem ersten Modelldatensatz ermittelt und von dem Computertomographiebilddatensatz subtrahiert wird,

   **dadurch gekennzeichnet, dass** in dem Korrekturalgorithmus vor jeder Anwendung des Bildverarbeitungsoperators zusätzlich ein für alle Energiespektren zu verwendender und Bilddaten aus allen Energiespektren umfassender Strukturbilddatensatz aus den zu korrigierenden Computertomographiebilddatensätzen ermittelt wird und danach für jedes Energiespektrum dem Bildverarbeitungsoperator als zweites Argument übergeben wird, wobei durch den Bildverarbeitungsoperator durchzuführende Bildverarbeitungsmaßnahmen auf der Basis des Strukturbilddatensatzes ermittelt und die Bildverarbeitungsmaßnahmen auf den als erstes Argument übergebenen zu korrigierenden Computertomographiedatensatz angewendet werden.

2. Verfahren nach Anspruch 1, **dadurch gekennzeichnet, dass** der Bildverarbeitungsoperator linear in seinem ersten Argument ist.

3. Verfahren nach Anspruch 2, **dadurch gekennzeichnet, dass** in dem Bildverarbeitungsoperator Koeffizienten einer Linearkombination bezüglich des ersten Arguments aus dem zweiten Argument ermittelt und angewendet werden.

4. Verfahren nach einem der vorangehenden Ansprüche, **dadurch gekennzeichnet, dass** der Bildverarbeitungsoperator durch einen adaptiven bilateralen Filter gebildet wird.

5. Verfahren nach einem der vorangehenden Ansprüche, **dadurch gekennzeichnet, dass** der Strukturbilddatensatz als eine Linearkombination der Computertomographiebilddatensätze der einzelnen Energiespektren bestimmt wird oder als ein einem alle weiteren Energiespektren umfassenden Energiespektrum, insbesondere dem Energiespektrum mit der niedrigsten Energieschwelle, zugeordneter Computertomographiebilddatensatz gewählt wird.

6. Verfahren nach einem der vorangehenden Ansprüche, **dadurch gekennzeichnet, dass** die Projektionsbilder mit einem photonenzählenden Röntgendetektor (7) aufgenommen werden.

7. Verfahren nach einem der vorangehenden Ansprüche, **dadurch gekennzeichnet, dass** bei iterativer Durchführung des Korrekturalgorithmus eine Schrittweite, die kleiner als Eins ist, verwendet wird.

8. Verfahren nach einem der vorangehenden Ansprüche, **dadurch gekennzeichnet, dass** der Bildverarbeitungsoperator ein Kantenrückgewinnungsoperator zumindest für Kanten ist, deren Normalenvektor eine insbesondere einen Schwellwert übersteigende Komponente entlang einer Rotationsachse aufweist, um die eine Röntgenquelle (6) einer verwendeten Computertomographieeinrichtung (4) bei dem Aufnahmevorgang der Projektionsbilder rotiert.

9. Verfahren nach einem der vorangehenden Ansprüche, **dadurch gekennzeichnet, dass** zur Rekonstruktion eine gefilterte Rückprojektion durchgeführt wird.

10. Computertomographieeinrichtung (4), aufweisend eine zur Durchführung eines Verfahrens nach einem der vorangehenden Ansprüche ausgebildete Steuereinrichtung (8).

11. Computerprogramm, welches die Schritte eines Verfahrens nach einem der Ansprüche 1 bis 9 durchführt, wenn es auf einer Recheneinrichtung ausgeführt wird.

12. Elektronisch lesbarer Datenträger, auf dem ein Computerprogramm nach Anspruch 11 gespeichert ist.

**Claims**

1. Computer-implemented method for reducing artifacts of at least one artifact type, in particular cone beam artifacts, when determining computed tomography image data sets from a projection image set in multi-energy computed tomography, wherein the projection image set is provided comprising at least two subsets assigned to different energy spectra and in order to determine and correct the computed tomography image data sets for each energy spectrum:

 - a computed tomography image data set to be corrected is reconstructed from the respective subset, and
 - within the scope of a correction algorithm, in particular iteratively:

 - for determining an intermediate data set, an image processing operator highlighting and/or reconstructing and/or selecting artifact-producing structures is applied to the computed tomography image data set,
 - based on the intermediate data set, a first model data set is determined by forward projection and reconstruction and a second model data set is determined by applying a low pass filter or identity mapping to the intermediate data set, and
 - an artifact data set is determined by subtraction of the second model data set from the first model data set and subtracted from the computed tomography image data set,

 **characterised in that** in the correction algorithm, before each application of the image processing operator, a structural image data set to be used for all energy spectra and comprising image data from all energy spectra is additionally determined from the computed tomography image data sets to be corrected, and subsequently transferred to the image processing operator as a second argument for each energy spectrum, wherein image processing measures to be carried out by the image processing operator are determined on the basis of the structural image data set and the image processing measures are applied to the computed tomography data set to be corrected and transferred as a first argument.

2. Method according to claim 1, **characterised in that** the image processing operator is linear in its first argument.

3. Method according to claim 2, **characterised in that** in the image processing operator, coefficients of a linear combination with respect to the first argument are determined and applied from the second argument.

4. Method according to one of the preceding claims, **characterised in that** the image processing operator is formed by an adaptive bilateral filter.

5. Method according to one of the preceding claims, **characterised in that** the structural image data set is determined as a linear combination of the computed tomography image datasets of the individual energy spectra or is selected as a computed tomography image data set assigned to an energy spectrum comprising all further energy spectra, in particular to the energy spectrum with the lowest energy threshold.

6. Method according to one of the preceding claims, **characterised in that** the projection images are recorded with a photon-counting x-ray detector (7).

7. Method according to one of the preceding claims, **characterised in that**, when the correction algorithm is carried out iteratively, a step size is used which is smaller than one.

8. Method according to one of the preceding claims, **characterised in that** the image processing operator is an edge recovery operator at least for edges of which the normal vector has a component which in particular exceeds a threshold value along an axis of rotation about which an x-ray source (6) of a computed tomography facility (4) used rotates during the recording process of the projection images.

9. Method according to one of the preceding claims, **characterised in that** a filtered back projection is carried out for the reconstruction.

10. Computed tomography facility (4) having a control facility (8) embodied for carrying out a method according to one of the preceding claims.

11. Computer program which performs the steps of a method according to one of claims 1 to 9 when it is executed on a computing facilty.

12. Electronically readable data carrier on which a computer program according to claim 11 is stored.

**Revendications**

1. Procédé mis en œuvre par ordinateur de réduction d'artefacts d'au moins un type d'artefact, en particulier d'artefacts de faisceau conique, lors de la détermination d'ensembles de données d'image en tomodensitométrie assistée par ordinateur, à partir d'un ensemble d'image de projection de la tomodensitométrie assistée par ordinateur à plusieurs énergies, dans lequel on prépare l'ensemble de données d'image de projection comprenant au moins deux ensembles partiels affectés à deux spectres d'énergie différents et, pour la détermination et la correction des ensembles de données d'image de tomodensitométrie assistée par ordinateur pour chaque spectre d'énergie :

   - on reconstruit un ensemble de données d'image de tomodensitométrie assistée par ordinateur à corriger à partir de l'ensemble partiel respectif, et
   - dans le cadre d'un algorithme de correction, en particulier par itération :

      - on applique à l'ensemble de données d'image de tomodensitométrie assistée par ordinateur, pour la détermination d'un ensemble de données intermédiaire, un opérateur de traitement d'image faisant ressortir et/ou reconstruisant et/ou sélectionnant des structures provoquant un artefact,
      - on détermine un premier ensemble de données de modèle par projection vers l'avant et reconstruction à partir de l'ensemble de données intermédiaire et un deuxième ensemble de données de modèle par application d'un filtre passe bas ou de la reproduction d'identité sur l'ensemble de données intermédiaire, et
      - on détermine un ensemble de données d'artefact par soustraction du deuxième ensemble de données de modèle du premier ensemble de données de modèle et on le soustrait de l'ensemble de données d'image de tomodensitométrie assistée par ordinateur, **caractérisé en ce que** l'on détermine, à partir des ensembles de données d'image de tomodensitométrie assistée par ordinateur à corriger, dans l'algorithme de correction, avant chaque opération de l'opérateur de traitement d'image, en outre un ensemble de données d'image de structure à utiliser pour tous les spectres d'énergie et comprenant des données d'image de tous les spectres d'énergie, et ensuite on le donne comme deuxième argument à l'opérateur de traitement d'image pour chaque spectre d'énergie, dans lequel on détermine, sur la base de l'ensemble de données d'image de structure, des mesures de traitement d'image à effectuer par l'opérateur de traitement d'image, et on applique les mesures de traitement d'image à l'ensemble de données de tomodensitométrie assistée par ordinateur à corriger, donné comme premier argument.

2. Procédé suivant la revendication 1, **caractérisé en ce que** l'opérateur de traitement d'image est linéaire dans son premier argument.

3. Procédé suivant la revendication 2, **caractérisé en ce que**, dans l'opérateur de traitement d'image, on détermine et applique, à partir du deuxième argument, des coefficients d'une combinaison linéaire relativement au premier argument.

4. Procédé suivant l'une des revendications précédentes, **caractérisé en ce que** l'on forme l'opérateur de traitement d'image par un filtre adaptatif bilatéral.

5. Procédé suivant l'une des revendications précédentes, **caractérisé en ce que** l'on détermine l'ensemble de données d'image de structure comme combinaison linéaire des ensembles de données de tomodensitométrie assistée par ordinateur des divers spectres d'énergie ou **en ce que** l'on sélectionne, comme ensemble de données d'image de tomodensitométrie assistée par ordinateur affecté à un spectre d'énergie comprenant tous les autres spectres d'énergie, en particulier le spectre d'énergie ayant le seuil d'énergie le plus bas.

6. Procédé suivant l'une des revendications précédentes, **caractérisé en ce que** l'on enregistre les images de projection par un détecteur (7) de rayons X comptant les photons.

7. Procédé suivant l'une des revendications précédentes, **caractérisé en ce que** l'on utilise, lorsque l'on effectue par itération l'algorithme de correction, une largeur de pas, qui est plus petite qu'un.

8. Procédé suivant l'une des revendications précédentes, **caractérisé en ce que** l'opérateur de traitement d'image est un opérateur de récupération de bords, au moins pour des bords dont le vecteur normal a une composante le long d'un axe de rotation dépassant en particulier une valeur de seuil, autour duquel tourne une source (6) de rayons X d'un dispositif (4) de tomodensitométrie assisté par ordinateur, utilisé lors de l'opération d'enregistrement des images de projection.

9. Procédé suivant l'une des revendications précédentes, **caractérisé en ce que** l'on effectue une rétroprojection filtrée pour la reconstruction.

10. Dispositif (4) de tomodensitométrie assisté par ordinateur comportant un dispositif (8) de commande constitué pour effectuer un procédé suivant l'une des revendications précédentes.

11. Programme d'ordinateur, qui effectue les stades d'un procédé suivant l'une des revendications 1 à 9, lorsqu'il est exécuté sur un dispositif informatique.

12. Support de données, déchiffrable électroniquement, sur lequel est mis en mémoire un programme d'ordinateur suivant la revendication 11.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHIANG HSIEH.** A Practical Cone Beam Artifact Correction Algorithm. *IEEE Nuclear Science Symposium Conference Record,* 2000, vol. 2, 15-71, 15-74
- **JOHAN SUNNEGAARDH et al.** A new method for windmill artifact reduction. *12th International Meeting on Fully Three-Dimensional Image Reconstruction in Radiology and Nuclear Medicine, Lake Tahoe, California, USA,* 2013
- Method for Reduction of Artifacts in Computed Tomography. **JOHAN SUNNEGAARDH.** Technik Up2Date. 2013
- **B. ZHANG et al.** Adaptive Bilateral Filter for Sharpness Enhancement and Noise. *IEEE Transactions on Image Processing,* 2008, vol. 5 (5), 664-678